# EUROPEAN PATENT SPECIFICATION

(11) **EP 2 582 975 B1**
(45) Date of publication and mention of the grant of the patent: **19.08.2015**
(21) Application number: 11729544.4
(22) Date of filing: 19.06.2011
(51) Int. Cl.: F03D 11/00, F03D 7/04, F03D 9/00, F03D 7/02, G05B 11/01

(54) **Control of wind turbines in a wind park**
Steuerung von Windturbinen in einem Windpark
Commande d'éoliennes dans un parc d'éoliennes

(30) Priority: 21.06.2010 US 356857 P
(43) Date of publication of application: 24.04.2013
(73) Proprietor: Vestas Wind Systems A/S, 8200 Aarhus N (DK)
(72) Inventor: BOWYER, Robert, London SW6 6LE (GB); SAREEN, Ashish, Sugar Land, Texas 77479 (US); BYREDDY, Chakradhar, Spring, Texas 77379 (US)
(74) Representative: Vestas Patents Department
(86) International application number: PCT/DK2011/050221
(87) International publication number: WO 2011/160634

(56) References cited:
- WO-A1-2007/045940
- US-A1- 2007 018 457
- US-A1- 2009 099 702
- US-A1- 2010 135 789

## Description

This invention relates to wind turbines, and in particular to the use of Lidar to control one or more operating parameters of one or more wind turbines of a wind park.

A wind park comprises an array of a plurality of wind turbines which have some element of common control and which output electrical power to a grid via a point of common connection. The relative siting of the wind turbines will depend on a number of factors including the topography of the site and the measured wind characteristics of the site. However, one factor that will always be taken into account is the effect of the wind turbines on each other. In particular, downstream turbines may be affected by the wake of upstream turbines to a degree that depends on the wind conditions. The effect of wakes on turbine positioning is discussed in a paper entitled 'The Dynamic Modelling of Wind Farms Considering Wake Effects and its Optimal Distribution' by Ma et al, Tianjin University of Technology, China IEEE 2009. This paper concludes that up to 28% of output power from a downstream turbine can be lost due to the effect of the wake of an upstream turbine, depending on the wind conditions.

There are known in the art examples of attempts to take wake effects into account. US-A-2007/0124025 and US-A-2009/0099702 both assigned to General Electric Company describe a wind park which comprises a plurality of wind turbines and a central control unit. A sensor arranged on one or more upstream wind turbines gathers advance information regarding wind which can be communicated to downstream turbines to enable them to adjust to changing wind conditions before those wind conditions arrive at the respective turbines. The sensors include laser/optical devices such as Lidar and ultrasonic devices such as Sodar. Information from these devices, and other sensors may be used by the central control unit to determine which of the upstream turbines causes a wake that impacts a downstream turbine so that the upstream turbine can be adjusted and thereby increase wind park energy capture. An upstream turbine which does not cause a wake that impacts a downstream turbine is not adjusted and remains running in a normal controller mode that optimises local energy capture. However, if it is determined that the wake from an upstream turbine will adversely impact energy capture at a downstream turbine, the operation of the upstream turbine is curtailed to enable the power production from the downstream turbine to be optimised by reducing the wake effect of the upstream turbine.

A similar approach is adopted in US-A-7,357,622 assigned to Stichting Energieonderzoek Centrum Nederland in which the power of upstream turbines is reduced where it is determined that a downstream turbine is in the wake of the upstream turbine. However, the reason for reducing upstream turbine power is to protect the downstream turbines from wake turbulence which can adversely affect the fatigue lifetime of downstream turbine components.

US 2007/018457A1 describes a method of operating a wind turbine in a safe mode.

These approaches to control of power output all use measurements made at upstream turbines to reduce the power output of downstream turbines if conditions require it. This is inherently disadvantageous as the effect of control is to reduce the power output by the wind turbines and thus the wind park.

In its broadest form, the present invention uses a Lidar or other device mounted at downstream turbines to measure, sense or determine the wake of one or more upstream turbines and adjusts a parameter of the downstream turbines in response to the measurement.

More specifically, there is provided a wind park, comprising a plurality of wind turbines and including at least one upstream turbine and at least one turbine downstream of the upwind turbine, wherein the downwind turbine includes a device for measuring or sensing the wake turbulence of the upstream turbine and for outputting a wake indicative signal to a controller, the controller generating a signal for controlling a parameter of the downstream turbine in response to the wake indicative signal, wherein the controller includes a fatigue estimator and the wake indicative signal provides an input to the fatigue estimator.

The invention also provides a method of controlling at least one wind turbine of a wind park, the turbine to be controlled being arranged downstream of at least one other upstream wind turbine and the turbine to be controlled including a device for measuring or sensing the wake of the upstream turbine, the method comprising measuring wake turbulence of the upstream turbine, generating a wake indicative signal to a controller in response to the measured wake turbulence, and, at the controller, generating a signal for controlling a parameter of the downstream turbine in response to the wake indicative signal, wherein the controller includes a fatigue estimator and the wake indicative signal provides an input to the fatigue estimator.

Preferably the device is a Lidar. Alternatively or additionally, the device comprise load determining sensors on wind turbine components and an azimuth angle controller for cyclically varying the azimuth of the downstream turbine to determine wake position based on sensed loads. This latter device has the advantage of being cheaper to implement than a Lidar.

In one preferred embodiment the Lidar measures the wake turbulence of a plurality of upstream turbines.

In one preferred embodiment of the invention the controller is a controller of the downstream turbine. Alternatively or additionally the controller controls a plurality of downstream turbines and outputs signals for controlling a parameter of a plurality of downstream turbines.

In one preferred embodiment the signal generated by the controller is a power overrating signal for controlling a parameter of the downstream turbine such that it outputs power at a level greater than its rated power. The controller includes a fatigue estimator which receives the wake indicative signal as an input. Preferably the overrating signal is output if the fatigue estimator estimates that the risk of fatigue damage to one or more components of the downstream turbine is low. In this embodiment the controller preferably outputs an overrating command when the fatigue estimator indicates a low risk of fatigue damage based on the wake indicative signal.

Preferably the control signal comprises one or more of a collective rotor blade pitch command, an individual rotor blade pitch command for each blade of the downstream turbine rotor, a rotor speed command and a nacelle yaw angle command.

Preferably the wind park comprises a plurality of downstream turbines at least some of which have a Lidar mounted on a respective turbine to measure the wake from one or more adjacent upwind turbines.

Preferably, the controller generates a control signal to set the position of the downstream rotor blades relative to wakes from the blades of the upstream turbine, whereby the effect of the upstream blade wake on the downstream turbine blades is minimised. A large portion of the wake comprises helical vortices shed by each blade as it rotates. By sensing or measuring this pattern the relative position of the downstream turbine blades to the upstream turbine blades can be set so that the downstream blades are interleaved with the helical wake to ensure that they are passing through clean air and so minimising the effect of the wake on the blades.

Preferably the wind park comprises an array of turbines at least some of which are arranged at the periphery of the wind park, wherein the wake measuring or sensing device is arranged on a plurality of peripheral turbines for sensing wake turbulence of one or more upstream turbines. This arrangement has the advantage that fewer wake measuring or sensing devices are required. In practice the active device at any time will depend on the wind direction. Devices which are upstream relative to the wind direction are not used. Devices which are downstream will see the cumulative wake of all the turbines in a row of the array.

Preferred embodiments of the invention have the advantage that the actual wake of one or more upstream turbines is measured from a turbine downstream of the wake. Depending on the measured wake conditions, the power output may be adjusted by adjusting a parameter of the turbine such as rotor speed, pitch angle or yaw angle. This adjustment may include the temporary overrating of one or more turbine in the absence of any wake effect at the downstream turbine. Thus, rather than being used to reduce the power output from the wind park, embodiments of the invention can, in some circumstances, enable power output to be increased. This has the advantage of increasing the power generated by the wind park and so increasing the financial return to the park operator. By exercising overrating control in response to fatigue estimation, overrating can be commanded only when the fatigue estimator estimates, based on the measured upstream wake, that the risk of fatigue damage is low.

Embodiments of the invention have the further advantage that the lifetime of a downstream turbine may be increased and the intervals between maintenance may be increased. Both are due to the turbine being controlled in response to actual measurements of wake turbulence from an upstream turbine.

Embodiments of the invention will now be described, by way of example only, and with reference to the accompanying drawings, in which:
Figure 1 is a schematic diagram of a wind park;
Figure 2 illustrates how parameters of a single downstream turbine may be controlled in response to measurements of the wake of an upstream turbine;
Figure 3 is similar to figure 2 and shows control by a wind park controller and applied to more than one turbine;
Figure 4 shows a standard graph of wind speed against power for a wind turbine; and
Figure 5 is a schematic diagram of a wind park showing Lidar mounted on selected boundary turbines.

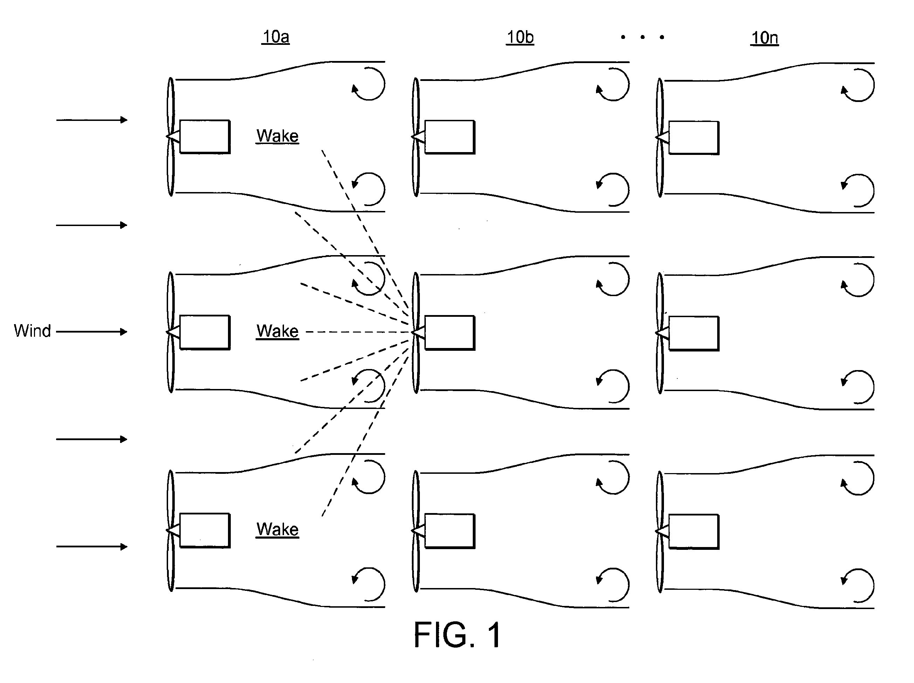

Figure 1 shows a wind park comprising a plurality of rows of wind turbines 10a - 10n. In the schematic illustration, the turbines are arranged in a regular pattern but in practice the distribution of the turbines will depend on the topography of the site and measured wind conditions at the site. In figure 1, the first row of turbines 10a is referred to as the upstream turbines although this will depend on the wind direction. As wind direction changes the turbines will yaw into the wind so that, for example a change of direction of 90 degrees will result in the left or right most column of turbines becoming the upstream row of turbines.

The size of the wake produced by a given turbine will depend on the wind speed and turbulence. At higher wind speeds, the wake may extend sufficiently behind a given upstream turbine the downstream turbine is in its shadow. Depending on the degree of turbulence in the wake, this may have an adverse affect on the downstream turbine as a turbulent airflow passing over the blades of the downstream turbine increases the loading on the blades and other components and may adversely affect the fatigue life of the components.

A Lidar apparatus is mounted on one or more of the downstream turbines to enable the wake of one or more upstream turbines to be measured. The use of Lidar in conjunction with wind turbines is known, for example, from US-A-7,281,891 assigned to Qinetiq Limited. In this document a Lidar is mounted in the turbine hub at an angle to the axis of rotation so that the beam or beams of the Lidar scan a cone as the blades rotate. This is only one example of Lidar positioning and any convenient location is possible, for example on the turbine nacelle behind the blades or on the tower. In the QinetiQ document, the Lidar is sensing wind conditions ahead of a turbine or wind park so that turbine parameters such as blade pitch can be optimised by the time the sensed wind arrives at the turbine. In the arrangement of figure 1, the Lidar senses the wake of one or more upstream turbines. A wake is an area of highly turbulent air that has passed through the turbine blades and, as energy is removed by the blades, the slowing air that forms the wake expands radially outwards. In order to measure the wake, the Lidar mounted on the downstream turbine must be able to measure turbulence which requires measurement of velocity in two or three directions. This may be achieved by using a scanning Lidar or a multibeam Lidar, for example. It is also desirable that the turbulence is measured at a variety of distances from the upstream turbine so that the extent of the wake can be determined as well as its strength. Therefore, it is desirable to use a Lidar with multiple range gates.

Depending on the Lidar used, a Lidar mounted on a downstream turbine may sense the wake of only one upstream turbine or a plurality of upstream turbines. Thus, a Lidar that has a single look direction may only measure a single upstream wake whereas a Lidar with multiple look directions may measure the wakes of two or more upstream turbines. The latter arrangement is preferable as it reduces the number of Lidar devices that are required on a wind farm.

Although a Lidar is the preferred apparatus for sensing the upstream wake, other devices could be used. For example another remote sensor could be used or the position and strength of the wake could be deduced by determining the loading on components of the turbine, for example the blades, at a variety of azimuth angles. By varying the azimuth position cyclically via the yaw drive, forces on the turbine components can be measured and used to deduce the position and strength of the wake.

The measurement of wake obtained from the Lidar provides an input to a controller which may either be an individual turbine controller or a wind park level controller or a combination of the two. In response to the measured wake, the controller may vary one or more turbine parameter such as, but not limited to, rotor speed, collective and/or individual blade pitch, and nacelle yaw angle.

Typically, a wind turbine controller includes a fatigue damage estimator. This part of the controller estimates the effect of measured wind parameter on the fatigue life of various components of the turbine and is a well-known part of a turbine controller. In an embodiment of the invention, the fatigues estimator receives an input derived from the measured wake. The controller may indicate that the turbulence due to an upstream wake at a given turbine is sufficiently low that the risk of fatigue damage is low. This indicates either that the upstream wake does not extend as far as the downstream turbine or that the wake is sufficiently weak at that point that its effects can be ignored. Under those conditions, and subject to other control parameters, the controller may adjust a parameter of the turbine such as rotor speed or pitch angle such that the turbine is overrated; that is the power output of the turbine is above the rated output of the turbine. The turbine may be operated at above rated output for as long as the wake measurements from the Lidar indicate that the effect of wake turbulence on the turbine will not cause fatigue damage.

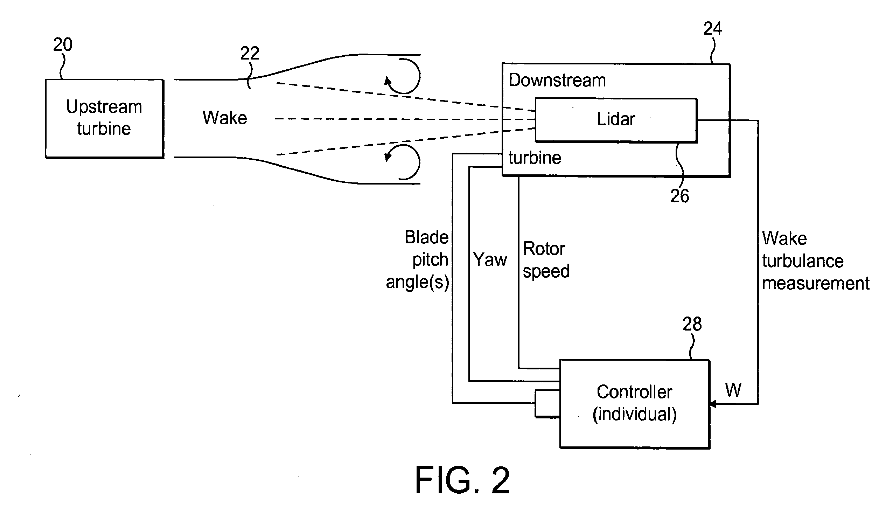

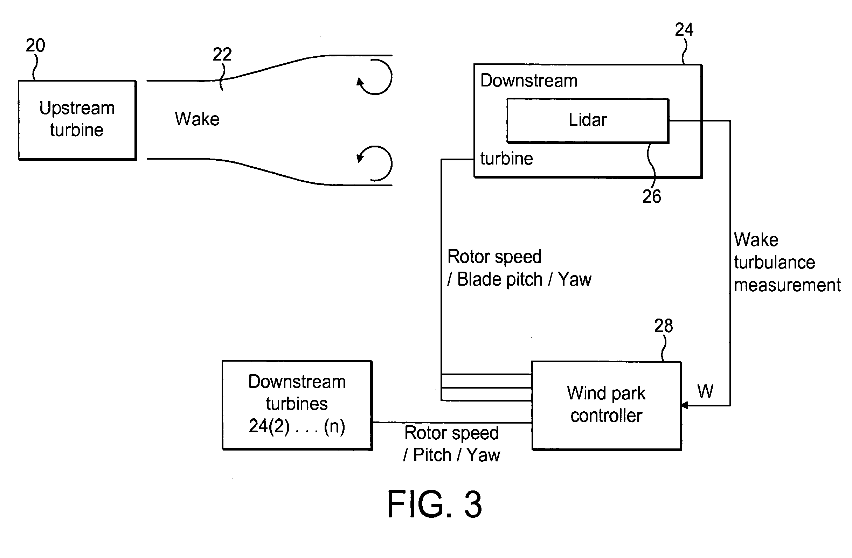

Figures 2 and 3 illustrate this control schematically. Figure 2 is an example in which control is performed on a single turbine by its own onboard controller. Figure 3 is a similar example where control is performed at the wind park level. In figures 2 and 3, the upstream turbine is shown at 20 generating a wake 22. A downstream turbine 24 includes a Lidar 26 which senses wake turbulence at a plurality of distances in front of the downstream turbine 24 and outputs a wake turbulence signal W which is an input to turbine controller 28, for example the fatigue estimator of that controller. Based on the wake signal W and other control parameters, and in accordance with the control algorithm applied by the controller, the controller generates a collective and/or individual blade pitch angle signal(s) and/or a rotor speed signal which are fed back to the turbine to control pitch angle and/or rotor speed.

The embodiment of figure 3 operates in the same manner except that the wake signal is input to a wind park controller. The controller provides blade pitch/rotor speed control signals to the turbine 24 as before but can also provide a yaw command and can provide blade pitch, rotor speed and yaw commands to one or more other downstream turbines 24 (2) ...(n). This is particularly advantageous where the Lidar at a given turbine is arranged such that it can measure the wake of more than one upstream turbine as those upstream wakes will affect more than one turbine. It also makes it easy to control the effects of turbine yaw. In figure 1, the turbines are shown facing into the wind. If the wind were at an angle of, say, 45 degrees to the turbines, the wake from an individual turbine would shift so that it no longer extended generally along the longitudinal axis of the nacelle but is at an angle to the nacelle. Depending on the wind conditions, the wake of a given upstream turbine may not only affect the downstream turbine immediately behind it but may affect adjacent downstream turbines. The use of a central controller makes it simple to send control signals to more than one turbine. These may include a yaw signal instructing the turbines to yaw into the direction of the wind at which point the wake of a given upstream turbine may only affect the immediate downstream turbine.

A central controller is also advantageous in that it enables a limited numbers of Lidars to be used in a wind park. Although it may be ideal for each turbine to have its own Lidar mounted on the turbine, the cost of individual Lidars is presently very high and may be prohibitive. Instead, only a proportion of downstream turbines may be provided with Lidars and the measurements made may be extrapolated for turbines without Lidars and suitable feedback control signals provided to those turbines by the park controller.

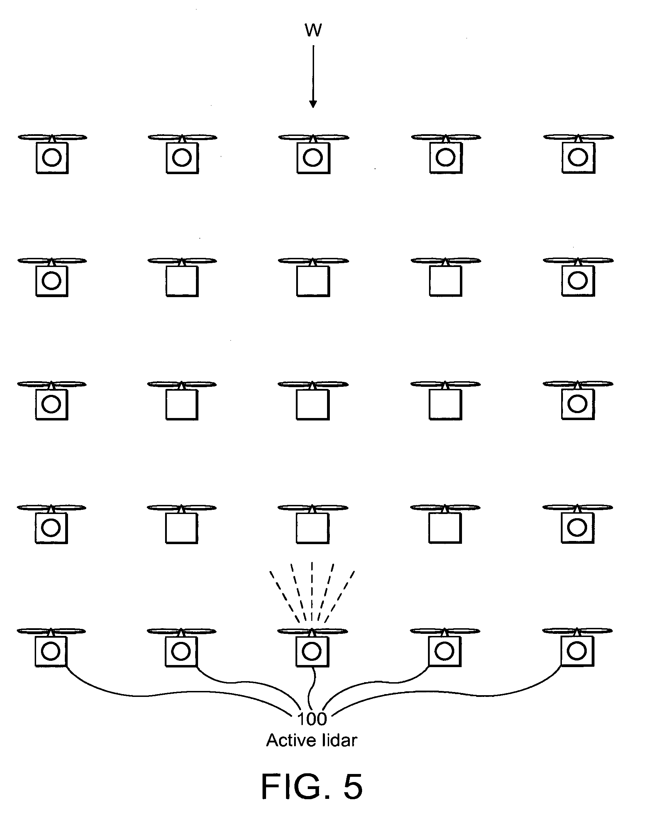

In one preferred embodiment, illustrated in figure 5, the turbines which have Lidar mounted on them are arranged at the boundary or periphery of the wind park. Thus in figure 5, a 5 x 5 array is shown with Lidars on each peripheral edge of the square. The active Lidars at any one time will depend on the wind direction and will always be downstream and detect the accumulated wake of all upstream turbines. Thus in figure 5, with the wind direction as indicated by the arrow, Lidars 100 will be active. This embodiment has the advantage of reducing the number of expensive Lidars required to a minimum. In figure 5 all the peripheral turbines have a Lidar but this is not essential.

As a further alternative, a combination of individual and park level control may be used. For example, wake signals provided from a given turbine may be used by that turbine's own controller and also supplied to a park level controller, or even a sub-park level controller which controls a plurality of turbines, but not all, to provide control signals for one of more other turbines.

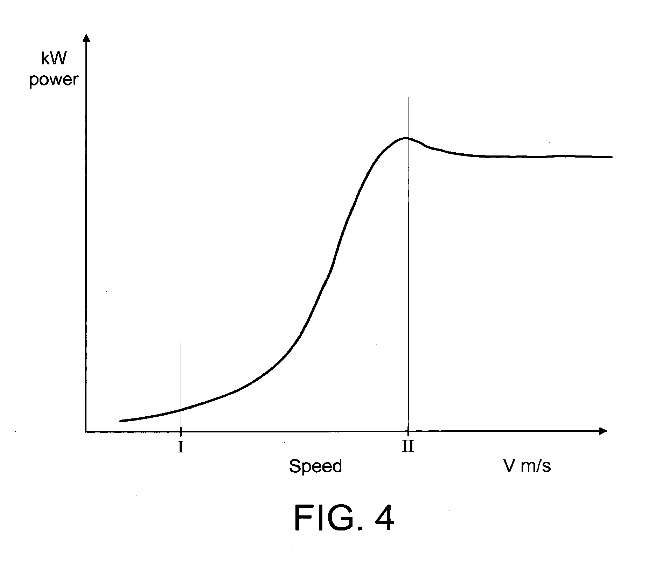

Rated power is a measure of the power output by a turbine at a given rated wind speed, for example 20 m/s. When the wind speed is below rated, the power output is also below rated, following a characteristic power/speed curve as shown in figure 4 as the region between I and II. When the turbine is operating in this region at below rated wind speeds, the power output may be increased to be above the curve if the Lidar measurements show that increasing output power will not increase fatigue damage. In a further embodiment of the invention, a measurement of wake position may be used to determine the optimum blade position of a turbine in relation to the blade position of an upstream turbine. A large component of a wind turbine wake is comprised of vortices spilling off the blade edges. As the blade rotates, there will be three helical areas of disturbed air from the blades forming the major part of the wake. Although these vortices will eventually diffuse and merge together, the effect will still be marked at the first downstream turbine. It is therefore desirable for the blades of the downstream turbine to be interleaved with those of the upstream turbine so that the effect of the helical areas of turbulence is minimised. Thus the blades of downstream turbine are rotating in clean air that is not disturbed by the helical vortices. It is preferred to use the Lidar measurements to detect the position of these trailing vortices and to adjust the position of the rotor blades in response. Thus, rotor blade position is a controlled variable in addition to speed and pitch angle. In this embodiment, the position of the rotor blades of a turbine is determined relative to the measured or sensed position of the wake from blades of an upwind turbine, preferably an immediately upwind turbine.

The upstream blade wake may be sensed using a Lidar as described in the embodiments above. Alternatively it may be sensed using a load sensor on the blades. One example is by a determination of blade root bending moments. The loading on the blades of the downstream turbine will depend on the position of the blades relative to wakes from the blades of the upstream turbine. Through advancing and retarding the relative position of the blades, by varying the rotor speed, the change in loading can be determined and the point of minimum loading determined. This will correspond to a position in which the blades of the rotor are passing through clean air between the helical vortices of the upstream blade wake.

Many other ways of measuring blade loading may be used and are well know to those skilled in the art. For example blade tip deflection may be measured.

Thus, the embodiments of the invention described are advantageous as they allows the output of an individual downstream turbine, and therefore the wind park, to be increased when wind conditions are such that an increase will not cause an unacceptable amount of fatigue damage. This is beneficial to the wind park operator as it increases the operating revenue that can be generated by the wind farm.

Embodiments of the invention also have the advantage that servicing and maintenance of downstream wind turbines can be reduced. As the Lidar is measuring the wake of upstream turbines and controlling the downstream turbines as a result of those measurements, the accrued damage to downstream turbines is reduced resulting in reduced service inspection. This is highly advantageous as service inspection of wind turbines can be very expensive as it requires power production to be stopped. It can also be very difficult as wind parks tend to be located in hard to access areas, and is a particular problem for off-shore wind parks. Thus, a reduction in service intervals is highly desirable.

As well as reducing service inspection, embodiments of the invention have the further advantage of increasing turbine component lifetime, in particular blade lifetime as the exposure of the downstream turbines to fatigue life reducing wake turbulence is controlled.

Various modifications to the embodiments will occur to those skilled in the art and may be made without departing from the scope of the invention which is defined by the following claims.

## Claims

1. A wind park, comprising a plurality of wind turbines and including at least one upstream wind turbine (20) and at least one wind turbine downstream (24) of the upstream turbine (20), wherein the downstream turbine (24) includes a device (26) for measuring or sensing the wake turbulence of the upstream turbine (20) and for outputting a wake indicative signal W to a controller (28), the controller (28) generating a signal for controlling a parameter of the downstream turbine (24) in response to the wake indicative signal W, **characterized in that** the controller (28) includes a fatigue estimator and the wake indicative signal W provides an input to the fatigue estimator.

2. A wind park according to claim 1, wherein the device (26) is a Lidar.

3. A wind park according to claim 2, wherein the Lidar measures the wake turbulence of a plurality of upstream turbines (20).

4. A wind park according to claim 1, 2 or 3, wherein the controller (28) is a controller at the downstream turbine (24).

5. A wind park according to any of claims 1 to 4, wherein the controller (28) controls a plurality of downstream turbines (24) and outputs signals for controlling a parameter of a plurality of downstream turbines (24).

6. A wind park according to any preceding claim, wherein the control signal generated by the controller (28) causes the downstream turbine (24) to output power at above the rated output of the downstream turbine (24).

7. A wind park according to any preceding claim, wherein the controller (28) outputs an overrating command when the fatigue estimator indicates a low risk of fatigue damage based on the wake indicative signal W.

8. A wind park according to any preceding claim, wherein the control signal comprises a collective rotor blade pitch command.

9. A wind park according to any preceding claim, wherein the control signal comprises an individual rotor blade pitch command for each blade of the downstream turbine rotor.

10. A wind park according to any preceding claim, wherein the control signal comprises a rotor speed command.

11. A wind park according to any preceding claim, wherein the control signal comprises a nacelle yaw angle command.

12. A wind park according to any preceding claim, comprising a plurality of downstream turbines (24) at least some of which have a Lidar (26) mounted on a respective turbine to measure the wake from one or more adjacent upstream turbines (20).

13. A wind park according to claim 1 or 2, wherein the device(26) comprises load determining sensors on wind turbine components and an azimuth angle controller for cyclically varying the azimuth of the downstream turbine to determine wake position based on sensed loads.

14. A wind park according to any preceding claim, wherein the controller (28) generates a control signal to set the position of the downstream rotor blades relative to wakes from the blades of the upstream turbine (20), whereby the effect of the upstream blade wake on the downstream turbine blades is minimised.

15. A wind park according to any preceding claim wherein the wind park comprises an array of turbines at least some of which are arranged at the periphery of the wind park, wherein the wake measuring or sensing device is arranged on a plurality of peripheral turbines for sensing wake turbulence of one or more upstream turbines.

16. A method of controlling at least one wind turbine of a wind park, the turbine to be controlled being arranged downstream (24) of at least one other upstream wind turbine (20) and the turbine to be controlled including a device (26) for measuring or sensing the wake of the upstream turbine (20), the method comprising measuring wake turbulence of the upstream turbine (20), generating a wake indicative signal W to a controller (28) in response to the measured wake turbulence, and, at the controller (28), generating a signal for controlling a parameter of the downstream turbine (24) in response to the wake indicative signal W, **characterized in that** the controller (28) includes a fatigue estimator and the wake indicative signal W provides an input to the fatigue estimator.

17. A method according to claim 16, wherein the signal generated by the controller (28) is a power overrating signal for controlling a parameter of the downstream turbine (24) such that it outputs power at a level greater than its rated power.

18. A method according to claim 17, wherein the overrating signal is output if the fatigue estimator estimates that the risk of fatigue damage to one or more components of the downstream turbine (24) is low.

## Patentansprüche

1. Windpark, der mehrere Windturbinen umfasst und mindestens eine Windturbine stromaufwärts (20) und mindestens eine Windturbine stromabwärts (24) von der Turbine stromaufwärts (20) enthält, wobei die Turbine stromabwärts (24) eine Vorrichtung (26) enthält, um die Wirbelschleppe der Turbine stromaufwärts (20) zu messen oder sensorisch zu erfassen und um ein Signal W, das solch eine Wirbelströmung anzeigt, an eine Steuereinheit (28) auszugeben wobei die Steuereinheit (28) ein Signal erzeugt, um einen Parameter der Turbine stromabwärts (24) als Reaktion auf das Signal W, das die Wirbelströmung anzeigt, zu steuern, **dadurch gekennzeichnet, dass** die Steuereinheit (28) eine Vorrichtung zum Schätzen des Ermüdungsniveaus enthält und dass das Signal W, das die Wirbelströmung anzeigt, eine Eingabe an den Vorrichtung zum Schätzen des Ermüdungsniveaus bereitstellt.

2. Windpark nach Anspruch 1, wobei die Vorrichtung (26) ein Lidar ist.

3. Windpark nach Anspruch 2, wobei das Lidar die Wirbelschleppe von mehreren Turbinen stromaufwärts (20) misst.

4. Windpark nach Anspruch 1, 2 oder 3, wobei die Steuereinheit (28) eine Steuereinheit an der Turbine stromabwärts (24) ist.

5. Windpark nach einem der Ansprüche 1 bis 4, wobei die Steuereinheit (28) mehrere Turbinen stromabwärts (24) steuert und Signale ausgibt, um einen Parameter mehrerer Turbinen stromabwärts (24) zu steuern.

6. Windpark nach einem vorhergehenden Anspruch, wobei das Steuersignal, das von der Steuereinheit (28) erzeugt worden ist, die Turbine stromabwärts (24) dazu veranlasst, Leistung über die Nennausgangsleistung der Turbine stromabwärts (24) hinaus auszugeben.

7. Windpark nach einem vorhergehenden Anspruch, wobei die Steuereinheit (28) eine Anweisung zum Überschreiten der Nennleistung ausgibt, wenn die Vorrichtung zum Schätzen des Ermüdungsniveaus ein geringes Risiko eines Ermüdungsschadens auf der Basis des Signals W, das die Wirbelströmung anzeigt, ausgibt.

8. Windpark nach einem vorhergehenden Anspruch, wobei das Steuersignal eine Anweisung zur gemeinsamen Rotorblattverstellung umfasst.

9. Windpark nach einem vorhergehenden Anspruch, wobei das Steuersignal eine Anweisung zur einzelnen Rotorblattverstellung für jedes Blatt des Turbinenrotors stromabwärts umfasst.

10. Windpark nach einem vorhergehenden Anspruch, wobei das Steuersignal eine Anweisung zur Rotorgeschwindigkeit umfasst.

11. Windpark nach einem vorhergehenden Anspruch, wobei das Steuersignal eine Anweisung zum Gierwinkel einer Gondel umfasst.

12. Windpark nach einem vorhergehenden Anspruch, der mehrere Turbinen stromabwärts (24) umfasst, von denen mindestens einige ein Lidar (26) aufweisen, das auf einer jeweiligen Turbine befestigt ist, um die Wirbelströmung von einer oder mehreren benachbarten Turbinen stromaufwärts (20) zu messen.

13. Windpark nach Anspruch 1 oder 2, wobei die Vorrichtung (26) auf den Windturbinenkomponenten Sensoren, die eine Last bestimmen, und eine Steuereinheit für den Azimutwinkel zum zyklischen Variieren des Azimuts der Turbine stromabwärts umfasst, um eine Position der Wirbelströmung auf der Basis der sensorisch erfassten Lasten zu bestimmen.

14. Windpark nach einem vorhergehenden Anspruch, wobei die Steuereinheit (28) ein Steuersignal erzeugt, um die Position der Rotorblätter stromabwärts relativ zu den Wirbelströmungen von den Blättern der Turbine stromaufwärts (20) festzusetzen, wodurch die Wirkung der Wirbelströmung des Blattes stromaufwärts auf die Turbinenblätter stromabwärts minimiert wird.

15. Windpark nach einem vorhergehenden Anspruch, wobei der Windpark eine Reihe von Turbinen umfasst, von denen mindestens einige an der Peripherie des Windparks angeordnet sind, wobei die Vorrichtung, die die Wirbelströmung misst oder sensorisch erfasst, auf mehreren peripheren Turbinen angeordnet ist, um die Wirbelschleppe von einer oder von mehreren Turbinen stromaufwärts sensorisch zu erfassen.

16. Verfahren zum Steuern von mindestens einer Windturbine eines Windparks, wobei die Turbine, die gesteuert werden soll, stromabwärts (24) von mindestens einer anderen Windturbine stromaufwärts (20) angeordnet ist, und wobei die Turbine, die gesteuert werden soll, eine Vorrichtung (26) enthält, um die Wirbelströmung der Turbine stromaufwärts (20) zu messen oder sensorisch zu erfassen, wobei das Verfahren ein Messen der Wirbelschleppe der Turbine stromaufwärts (20), ein Erzeugen eines Signals W, das die Wirbelströmung anzeigt, an eine Steuereinheit (28) als Reaktion auf die gemessene Wirbelschleppe, und an der Steuereinheit (28) ein Erzeugen eines Signals, um einen Parameter der Turbine stromabwärts (24) als Reaktion auf das Signal W, das die Wirbelströmung anzeigt, zu steuern, umfasst, **dadurch gekennzeichnet, dass** die Steuereinheit (28) eine Vorrichtung zum Schätzen des Ermüdungsniveaus enthält und dass das Signal W, das die Wirbelströmung anzeigt, eine Eingabe an den Vorrichtung zum Schätzen des Ermüdungsniveaus bereitstellt.

17. Verfahren nach Anspruch 16, wobei das Steuersignal, das von der Steuereinheit (28) erzeugt worden ist, ein Signal zum Überschreiten der Nennleistung ist, um einen Parameter der Turbine stromabwärts (24) derart zu steuern, dass sie eine Nennleistung auf einer Höhe ausgibt, die größer als die Nennleistung ist.

18. Verfahren nach Anspruch 17, wobei das Signal zum Überschreiten der Nennleistung ausgegeben wird, wenn die Vorrichtung zum Schätzen des Ermüdungsniveaus schätzt, dass das Risiko eines Ermüdungsschadens von einem oder mehreren Komponenten der Turbine stromabwärts (24) gering ist.

## Revendications

1. Parc éolien, comprenant une pluralité d'éoliennes et incluant au moins une éolienne amont (20) et au moins une éolienne (24) en aval de la turbine amont (20), dans lequel la turbine aval (24) inclut un dispositif (26) pour mesurer ou détecter la turbulence de sillage de la turbine amont (20) et pour sortir un signal indicatif de sillage W vers une unité de commande (28), l'unité de commande (28) produisant un signal pour commander un paramètre de la turbine aval (24) en réponse au signal indicatif de sillage W, **caractérisé en ce que** l'unité de commande (28) inclut un dispositif d'évaluation de fatigue et le signal indicatif de sillage W fournit une entrée au dispositif d'évaluation de fatigue.

2. Parc éolien selon la revendication 1, dans lequel le dispositif (26) est un Lidar (light intensity detection and ranging - détection et télémétrie par la lumière).

3. Parc éolien selon la revendication 2, dans lequel le Lidar mesure la turbulence de sillage d'une pluralité de turbines amont (20).

4. Parc éolien selon la revendication 1, 2 ou 3, dans lequel l'unité de commande (28) est une unité de commande au niveau de la turbine aval (24).

5. Parc éolien selon n'importe laquelle des revendications 1 à 4, dans lequel l'unité de commande (28) commande une pluralité de turbines aval (24) et sort des signaux pour commander un paramètre d'une pluralité de turbines aval (24).

6. Parc éolien selon l'une quelconque des revendications précédentes, dans lequel le signal de commande produit par l'unité de commande (28) amène la turbine aval (24) à sortir une puissance au-dessus de la sortie nominale de la turbine aval (24).

7. Parc éolien selon n'importe quelle revendication précédente, dans lequel l'unité de commande (28) sort une commande d'élévation de caractéristique nominale lorsque le dispositif d'évaluation de fatigue indique un faible risque de dégâts dus à la fatigue en se basant sur le signal indicatif de sillage W.

8. Parc éolien selon n'importe quelle revendication précédente, dans lequel le signal de commande comprend une instruction collective de pas de pale de rotor.

9. Parc éolien selon n'importe quelle revendication précédente, dans lequel le signal de commande comprend une instruction individuelle de pas de pale de rotor pour chaque pale du rotor de turbine aval.

10. Parc éolien selon n'importe quelle revendication précédente, dans lequel le signal de commande comprend une instruction de vitesse de rotor.

11. Parc éolien selon n'importe quelle revendication précédente, dans lequel le signal de commande comprend une instruction d'angle de lacet de nacelle.

12. Parc éolien selon n'importe quelle revendication précédente, comprenant une pluralité de turbines aval (24) dont au moins certaines ont un Lidar (26) monté sur une turbine respective pour mesurer le sillage provenant d'une ou plusieurs turbines amont adjacentes (20).

13. Parc éolien selon la revendication 1 ou 2, dans lequel le dispositif (26) comprend des capteurs de détermination de charge sur des composants d'éolienne et une unité de commande d'angle d'azimut pour faire varier de manière cyclique l'azimut de la turbine aval pour déterminer la position de sillage en se basant sur des charges détectées.

14. Parc éolien selon n'importe quelle revendication précédente, dans lequel l'unité de commande (28) produit un signal de commande pour régler la position des pales de rotor aval en liaison aux sillages par rapport aux pales de la turbine amont (20) de sorte que l'effet du sillage de pale amont sur les pales de turbine aval est réduit au minimum.

15. Parc éolien selon n'importe quelle revendication précédente, dans lequel le parc éolien comprend un groupement de turbines dont au moins certaines sont agencées à la périphérie du parc éolien, dans lequel le dispositif de mesure ou de détection de sillage est agencé sur une pluralité de turbines périphériques pour détecter une turbulence de sillage d'un ou plusieurs turbines amont.

16. Procédé de commande d'au moins une éolienne d'un parc éolien, la turbine à commander étant agencée en aval (24) d'au moins une autre éolienne amont (20) et la turbine à commander incluant un dispositif (26) pour mesurer ou détecter le sillage de la turbine amont (20), le procédé comprenant la mesure de turbulence de sillage de la turbine amont (20), la production d'un signal indicatif de sillage W vers une unité de commande (28) en réponse à la turbulence de sillage mesurée, et, au niveau de l'unité de commande (28), la production d'un signal pour commander un paramètre de la turbine aval (24) en réponse au signal indicatif de sillage W, **caractérisé en ce que** l'unité de commande (28) inclut un dispositif d'évaluation de fatigue et le signal indicatif de sillage W fournit une entrée au dispositif d'évaluation de fatigue.

17. Procédé selon la revendication 16, dans lequel le signal produit par l'unité de commande (28) est un signal d'élévation de caractéristique nominale de puissance pour commander un paramètre de la turbine aval (24) de sorte qu'elle sort une puissance à un niveau plus grand que sa puissance nominale.

18. Procédé selon la revendication 17, dans lequel le signal d'élévation de caractéristique nominale est sorti si le dispositif d'évaluation de fatigue évalue que le risque de dégâts dus à la fatigue à un ou plusieurs composants de la turbine aval (24) est faible.
